# EUROPÄISCHE PATENTSCHRIFT

(11) **EP 0 563 511 B1**
(45) Veröffentlichungstag und Bekanntmachung des Hinweises auf die Patenterteilung: **09.05.2001**
(21) Anmeldenummer: 93100460.0
(22) Anmeldetag: 14.01.1993
(51) Int. Cl.: H04Q 11/04, H04J 3/16

(54) **Decoder für Informationsströme in einem synchronen digitalen Nachrichten-Transportsystem**
Decoder for data-streams in a synchronous digital hierarchical system
Décodeur pour trains d'informations dans un système de transmission utilisant la hiérarchie numérique synchrone

(30) Priorität: 21.02.1992 DE 4205238
(43) Veröffentlichungstag der Anmeldung: 06.10.1993
(73) Patentinhaber: WANDEL & GOLTERMANN GmbH & Co., D-72795 Eningen u.A. (DE)
(72) Erfinder: Heidenreich, Karl-Heinz, Dipl.-Ing., 72585 Riederich (DE)
(74) Vertreter: Klocke, Peter, Dipl.-Ing.

(56) Entgegenhaltungen:
- EP-A- 0 440 128
- DE-A- 4 018 687
- NTZ, OCT. 1988, WEST GERMANY, Bd. 41, Nr. 10, ISSN 0027-707X, Seiten 570-574, EHRLICH W ET AL 'The new synchronous digital hierarchy'

## Beschreibung

Die Erfindung betrifft einen Decoder für Informationsströme in einem synchronen digitalen Nachrichten-Transportsystem gemäß der Gattung des Anspruchs 1.

Unter dem Begriff "Synchrone Digitale Hierarchie (SDH) ist in den CCITT-Empfehlungen G. 707, G. 708, G.709 ein synchrones digitales Nachrichten-Transportsystem beschrieben. Ein weiteres System mit ähnlicher Struktur ist z. B. unter dem Begriff "SONET" (Synchronous Optical Transmission Network) bekannt (American National Standard - ANSI T1.107-1988) (Bell Communications Research - Bellcore TA-NWT-000253-1990).

Nachrichten-Transportsysteme stellen Verbindungen her zwischen Systembenutzern (User). Diese generieren Informationsströme, die das System in sogenannten User-Kanälen transportiert. Systeme der erwähnten Art (SDH, SONET) übertragen Nachrichten in Form von Bitströmen. Dabei werden abschnittsweise mehrere Einzelströme der System-Benutzer zusammen mit System-internen Strömen und zusammen mit festen und variablen Stopfbits übertragen. Die zeitliche Verflechtung der Ströme und Zusatzbits kann mit Blockformaten beschrieben werden. Dort sind feste Positionen definiert, in denen alternativ Informationsbits oder Stopfbits übertragen werden können (Stopfpositionen, S). Die jeweilige Belegung wird mit Control Bits (C) gekennzeichnet, die im gleichen Block vor den Stopfpositionen übertragen werden. Der Bitstrom eines Systembenutzers durchläuft im Transportsystem in der Regel mehrere Blockformate.

Zur übersichtlichen Darstellung der Formate wird der jeweils zu beschreibende Gesamtbitstrom in 8-Bit-Bytes quantisiert, wobei ein Byte natürlich Bits aus verschiedenen Kanälen umfassen kann. Dies wird durch Bitmuster (Patterns) für die einzelnen Bytes beschrieben. Im folgenden werden die Blockformate in jeweils 9 Spalten mit einer für den jeweiligen Block eindeutigen Positionsnumerierung dargestellt.

Das nachfolgende Bild zeigt das Blockformat eines synchronen Transportmoduls (STM-1). Der STM-1 hat ein Blockformat von 270 Zeilen, also 9 * 270 = 2430 Bytepositionen.

| 1 | 2 | 3 | 4 | 5 | 6 | 7 | 8 | 9 |
|---|---|---|---|---|---|---|---|---|
| 0001 A1 | 0271 S | 0541 S | 0811 P | 1081 S | 1351 S | 1621 S | 1891 S | 2161 S |
| 0002 A1 | 0272 S | 0542 S | 0812 P | 1082 S | 1352 S | 1622 S | 1892 S | 2162 S |
| 0003 A1 | 0273 S | 0543 S | 0813 P | 1083 S | 1353 S | 1623 S | 1893 S | 2163 S |
| 0004 A2 | 0274 S | 0544 S | 0814 P | 1084 S | 1354 S | 1624 S | 1894 S | 2164 S |
| 0005 A2 | 0275 S | 0545 S | 0815 P | 1085 S | 1355 S | 1625 S | 1895 S | 2165 S |
| 0006 A2 | 0276 S | 0546 S | 0816 P | 1086 S | 1356 S | 1626 S | 1896 S | 2166 S |
| 0007 S | 0277 S | 0547 S | 0817 C- | 1087 S | 1357 S | 1627 S | 1897 S | 2167 S |
| 0008 S | 0278 S | 0548 S | 0818 C- | 1088 S | 135B S | 1628 S | 1898 S | 2168 S |
| 0009 S | 0279 S | 0549 S | 0819 C- | 1009 S | 1359 S | 1629 S | 1899 S | 2169 S |
| 0010 C | 0280 C | 0550 C | 0820 C+ | 1090 C | 1360 C | 1630 C | 1900 C | 2170 C |
| 0011 C | 0281 C | 0551 C | 0821 C+ | 1091 C | 1361 C | 1631 C | 1901 C | 2171 C |
| 0012 C | 0282 C | 0552 C | 0822 C+ | 1092 C | 1362 C | 1632 C | 1902 C | 2172 C |
| | | | | | | | | |
| 0268 C | 0538 C | 0808 C | 1078 C | 1348 C | 1618 C | 1888 C | 2158 C | 2429 C |
| 0269 C | 0539 C | 0809 C | 1079 C | 1349 C | 1619 C | 1889 C | 2159 C | 2428 C |
| 0270 C | 0540 C | 0810 C | 1080 C | 1350 C | 1620 C | 1890 C | 2160 C | 2430 C |

Die ersten 9 Zeilen enthalten den sogenannten Section Overhead (SOH) und 6 Pointer Bytes. Im SOH befindet sich das 6 Byte lange Synchronwort aus A1 und A2. Die Pointer-positionen wurden mit P bezeichnet, sonstige SOH Positionen mit S. Die restlichen 261 Zeilen fassen den zu transportierenden Nachrichten-Inhalt (C=Content). In den Positionen 817 bis 822 werden Verschiebungen des Inhalts unter der Kontrolle des Pointerwerts in Tribyte-Schritten vorgenommen. Bei stationärem Pointerwert sind die Positionen 817 bis 819 leer und 820 bis 822 mit C belegt, und der Pointerwert sagt aus, wieviele Tribytes nach dem Ende des Pointers das Inhalt-Format beginnt.

Der Inhalt kann aber auch aus einem Multiplex von 3 kleineren Formaten bestehen. Diese transportieren dann die Nachrichten von je einem Kanal (A, B, C), und der aus 6 Byte bestehende Pointer wird in 3 je 2 Byte lange Pointer aufgeteilt. Auch der 6 Byte lange Variationsbereich wird in 3 je 2 Byte lange Teile zerlegt.

| 1 | 2 | 3 | 4 | 5 | 6 | 7 | 8 | 9 |
|---|---|---|---|---|---|---|---|---|
| 0001 A1 | 0271 S | 0541 S | 0811 PA | 1081 S | 1351 S | 1621 S | 1891 S | 2161 S |
| 0003 A1 | 0272 S | 0542 S | 0812 PB | 1082 S | 1352 S | 1622 S | 1892 S | 2162 S |
| 0003 A1 | 0273 S | 0543 S | 0813 PC | 1083 S | 1353 S | 1623 S | 1893 S | 2163 S |
| 0004 A2 | 0274 S | 0544 S | 0814 PA | 1084 S | 1354 S | 1624 S | 1894 S | 2164 S |
| 0005 A2 | 0275 S | 0545 S | 0815 PB | 1085 S | 1355 S | 1625 S | 1895 S | 2165 S |
| 0006 A2 | 0276 S | 0546 S | 0816 PC | 1006 S | 1356 S | 1626 S | 1896 S | 2166 S |
| 0007 S | 0277 S | 0547 S | 0817 A- | 1087 S | 1357 S | 1627 S | 1897 S | 2167 S |
| 0008 S | 0278 S | 0548 S | 0818 D- | 1088 S | 1358 S | 1628 S | 1898 S | 2168 S |
| 0010 A | 0280 A | 0550 A | 0820 A+ | 1090 A | 1360 A | 1630 A | 1900 A | 2170 A |
| 0011 B | 0281 B | 0551 B | 0821 A+ | 1091 B | 1361 B | 1631 B | 1901 B | 2171 B |
| 0012 C | 0282 C | 0552 C | 0822 A+ | 1092 C | 1362 C | 1632 C | 1902 C | 2172 C |
| | | | | | | | | |
| 0268 A | 0538 A | 0808 A | 1078 A | 1348 A | 1618 A | 1888 A | 2158 A | 2428 A |
| 0269 B | 0539 B | 0809 B | 1079 B | 1349 B | 1619 B | 1889 B | 2159 B | 2429 B |
| 0270 C | 0540 C | 0810 C | 1080 C | 1350 C | 1620 C | 1890 C | 2160 C | 2430 C |

Die Blockformate der Kanäle A, B, C sind je 87 Zeilen lang und können mit je einem Pointer im STM-1 unabhängig voneinander verschoben werden.

In der Literatur wird das den Bitstrom des Systembenutzers aufnehmende Format als Container bezeichnet, und die Formate der Container werden entsprechend ihrer Größe und ihrer hierarchischen Zuordnung numeriert. Bei CCITT werden die Typen C4, C3, C2, C12, C11 beschrieben.

Container werden zusammen mit einer System-internen Zusatzinformation für den Übertragungspfad übertragen. Diese wird als Path Overhead (POH) bezeichnet. Das aus dem Container und dem POH zusammengesetzte Format wird als Virtueller Container (VCx) bezeichnet. Bei CCITT werden die Typen VC4, VC3, VC2, VC12, VC11 beschrieben.

Das 261-zeilige Blockformat faßt einen sogenannten Virtuellen Container VC-4, in dem sich ein Path Overhead (POH) und der Bitstrom eines Kanals für die Geschwindigkeit 139 264 kbit/s befindet.

| 0001 POH | 0262 POH | 0523 POH | 0784 POH | 1045 POH | 1306 POH | 1567 POH | 1828 POH | 2089 POH |
|---|---|---|---|---|---|---|---|---|
| 0002 C | 0263 C | 0524 C | 0785 C | 1046 C | 1307 C | 1568 C | 1829 C | 2090 C |
| 0003 C | 0264 C | 0525 C | 0786 C | 1047 C | 1308 C | 1569 C | 1830 C | 2091 C |
| | | | | | | | | |
| 0261 C | 0522 C | 0783 C | 1044 C | 1305 C | 1566 C | 1827 C | 2088 C | 2349 C |

Das 87-zeilige Blockformat faßt einen Virtuellen Container VC-3, in dem sich ein Path Overhead (POH) und der Bitstrom eines Kanals für die Geschwindigkeit 44 736 kbit/s oder 34 368 kbit/s befindet.

| 0001 POH | 0088 POH | 0175 POH | 0262 POH | 0349 POH | 0436 POH | 0523 POH | 0610 POH | 0697 POH |
|---|---|---|---|---|---|---|---|---|
| 0002 C | 0089 C | 0176 C | 0263 C | 0350 C | 0437 C | 0524 C | 0611 C | 0698 C |
| 0003 C | 0090 C | 0177 C | 0264 C | 0351 C | 0438 C | 0528 C | 0612 C | 0699 C |
| | | | | | | | | |
| 0087 C | 0174 C | 0261 C | 0348 C | 0435 C | 0522 C | 0609 C | 0696 C | 0783 C |

Im 261 Zeilen langen VC-4 können sich aber auch 3 je 85 Zeilen lange VC-3 mit gleichem Nutzinhalt wie bei den 87 Zeilen langen VC-3 befinden. Sie transportieren Nachrichten der Kanäle A, B, C.

| 0001 POH | 0262 POH | 0523 POH | 0784 POH | 1045 POH | 1306 POH | 1567 POH | 1820 POH | 2089 POH |
|---|---|---|---|---|---|---|---|---|
| 0002 * | 0263 * | 0524 * | 0785 * | 1046 * | 1307 * | 1568 * | 1829 * | 2090 * |
| 0003 * | 0264 * | 0525 * | 0786 * | 1047 * | 1308 * | 1559 * | 1830 * | 2091 * |
| 0004 PA | 0265 PA | 0526 A- | 0787 * | 1048 * | 1309 * | 1570 * | 1831 * | 2092 * |
| 0005 PB | 0266 PB | 0527 B- | 0788 * | 1049 * | 1310 * | 1571 * | 1832 * | 2093 * |
| 0006 PC | 0267 PC | 0528 C- | 0789 * | 1050 * | 1311 * | 1572 * | 1833 * | 2094 * |
| 0007 A | 0268 A | 0529 A+ | 0790 A | 1051 A | 1312 A | 1573 A | 1834 A | 2095 A |
| 0008 B | 0269 B | 0530 B+ | 0791 D | 1052 B | 1313 B | 1574 B | 1835 B | 2096 B |
| 0009 C | 0270 C | 0531 C+ | 0792 C | 1053 C | 1314 C | 1575 C | 1836 C | 2097 C |
| | | | | | | | | |
| 0259 A | 0520 A | 0781 A | 1042 A | 1303 A | 1564 A | 1825 A | 2086 A | 2347 A |
| 0260 B | 0521 B | 0782 B | 1043 B | 1304 B | 1565 B | 1826 B | 2087 B | 2348 B |
| 0261 C | 0522 C | 0783 C | 1044 C | 1305 C | 1566 C | 1827 C | 2088 C | 2349 C |

Das 85-zeilige Blockformat faßt den Virtuellen Container VC-3, in dem sich ein Path Overhead (POH) und der Bitstrom eines Kanals für die Geschwindigkeit 44 736 kbit/s oder 34 368 kbit/s befindet.

| 0001 POH | 0086 POH | 0171 POH | 0256 POH | 0341 POH | 0426 POH | 0511 POH | 0596 POH | 0681 POH |
|---|---|---|---|---|---|---|---|---|
| 0002 C | 0087 C | 0172 C | 0257 C | 0342 C | 0427 C | 0512 C | 0597 C | 0682 C |
| 0003 C | 0088 C | 0173 C | 0258 C | 0343 C | 0428 C | 0513 C | 0598 C | 0683 C |
| | | | | | | | | |
| 0085 C | 0170 C | 0255 C | 0340 C | 0425 C | 0510 C | 0595 C | 0680 C | 0765 C |

Anstelle jedes der 3 VC-3 im VC-4 können sich aber auch 7 VC-2 befinden. Diese sind den Kanälen A, B, C, D, E, F, G zugeordnet. Das Format des VC-2 und des im folgenden erwähnten VC-12 und VC-11 sind innerhalb von 4 aufeinander folgenden STM-1 Frames F1...F4, nämlich eines Quadframes (QF) definiert. Ein Multiframe Indicator H4 im POH (POS 1306) numeriert die Frames innerhalb des QF. Jedem VC-2 ist in jedem Frame ein Pointer Byte vorangestellt, und der VC-3 Pointer wird durch einen Null Pointer Indicator (NPI) ersetzt. Wenn sich also z. B. anstelle des VC-3 Kanals C sieben VC-2 Kanäle befinden, so stehen in Pos 0006, 0267, 0528 NPI Bytes, und in den jeweils ersten Positionen des Typs CA, CB, CC, CD, CE, CF, CG stehen die Pointer Bytes der VC-2 Kanäle A, B, C, D, E, F, G.

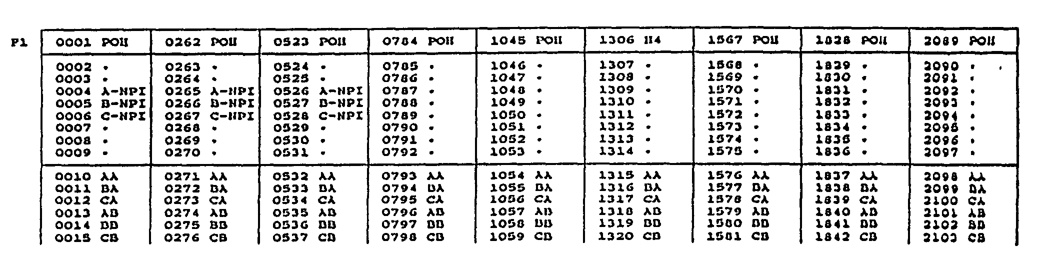

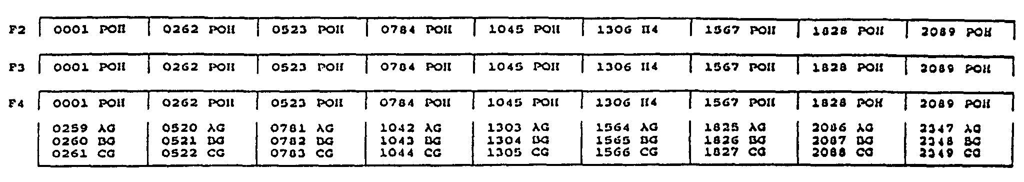

Jeder der drei 87-zeiligen VC-3 im STM-1 kann ebenfalls 7 VC-2 aufnehmen. Dies ergibt dann folgende Aufteilung des betreffenden VC-3:

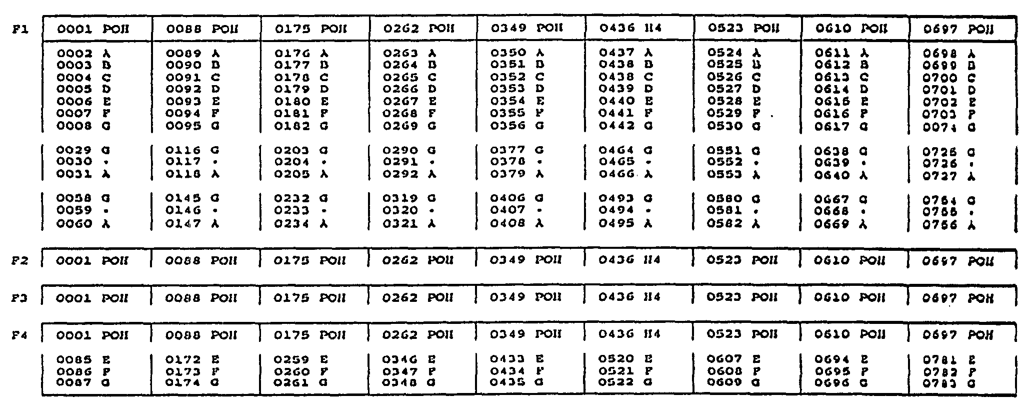

Weiterhin können in allen Fällen an die Stelle eines VC-2 drei VC-12 oder 4 VC-11 treten. Der Anfang jedes dieser Formate wird mit einem 2 Byte umfassenden Pointer (PTR) definiert:

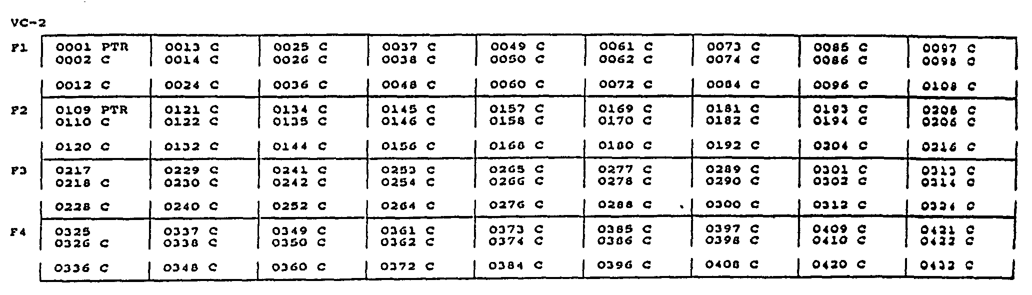

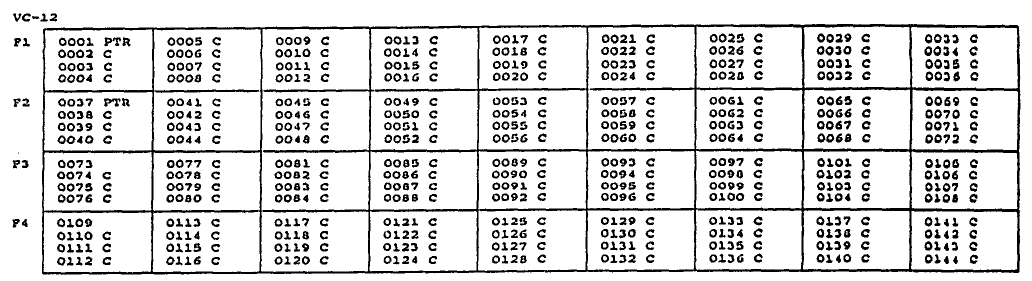

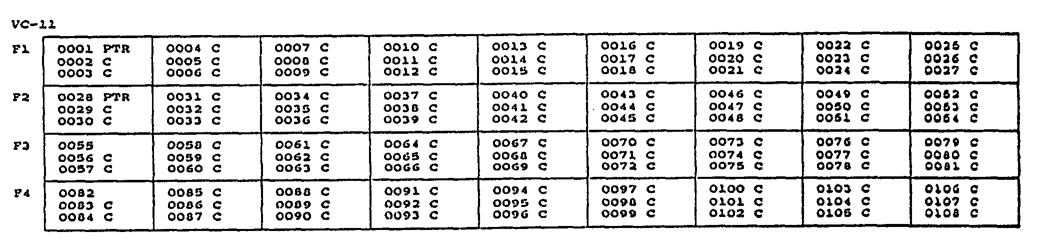

Der Inhalt dieser Formate ist also in jedem Teilframe um 1 Byte, im Quadframe um 4 Byte kürzer. Das erste Byte des Inhalts dient als Path Overhead (POH=V5).

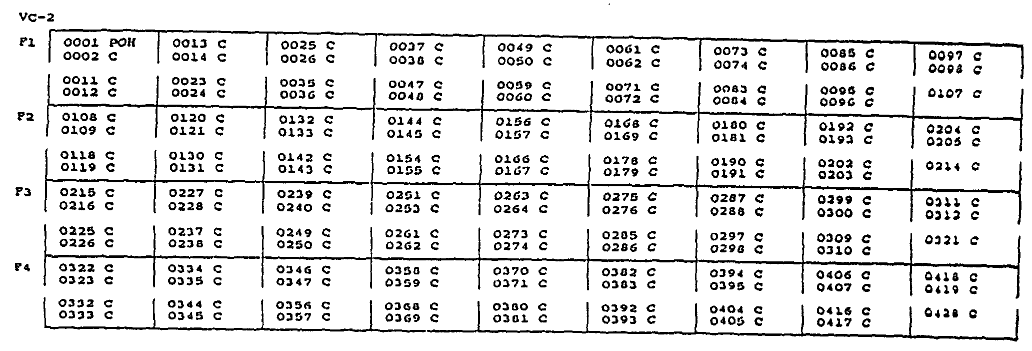

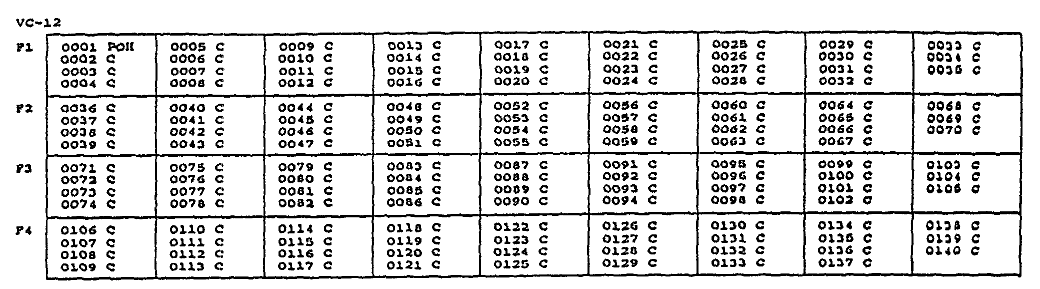

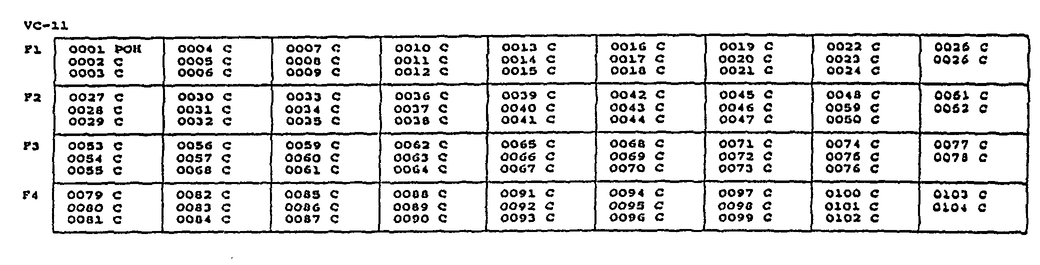

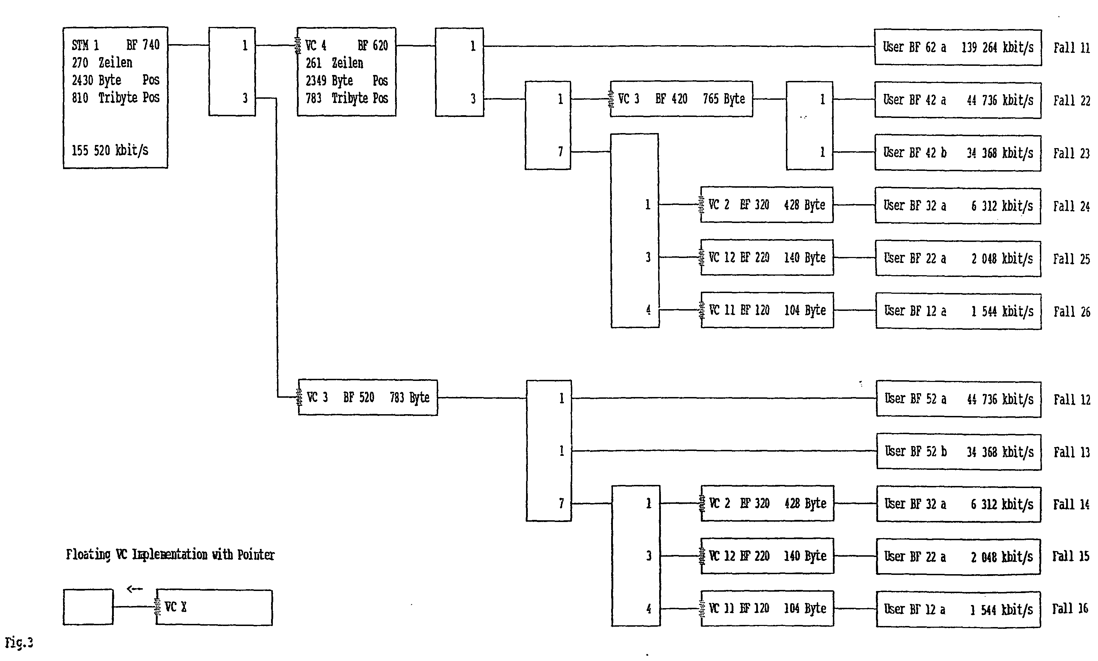

Figur 3 stellt die möglichen VC-Kombinationen in einem STM-1 zusammen. Dabei wird insbesondere die Anwendung von Pointern zum Implementieren der VC in größere Blockformate mit variabler Phase (floating) aufgezeigt. Die Blockformate sind mit eindeutigen, an der Blockgröße orientierten Bezeichnungen (BF...) versehen. Varianten gleicher Blockgröße werden mit Kleinbuchstaben (a, b...) unterscheiden.

Die EP-A- 0 440 128 offenbart einen Decoder für Informationsströme in einem Synchronen Digitalen Nachrichtentransportsystem mit den Merkmalen des Oberbegriffs des Anspruchs 1. Diese bekannte Anordnung dient dazu, die bei der Nachrichtenübertragung im SDH-System erforderlichen Kanäle zu bilden, in die Nachrichten eingegeben werden und aus denen diese möglichst originalgetreu wieder abgegeben werden. Diese Anordnung ist für meß- und überwachungstechnische Aufgabenstellungen insofern nicht geeignet, als eine für die Meßtechnik geeignete Anordnung auch bezüglich der Anpassung an die im Meßfall vorhandene hierarchische Konfiguration flexibel, also leicht und übersichtlich handhabbar sein muß.

Der Erfindung liegt die Aufgabe zugrunde, vorzugsweise zu Meß- und Überwachungszwecken die Inhalte der Overheads und einzelner Userkanäle aus dem STM zu decodieren.

Dazu ist eine Schaltungsstruktur zu definieren, die sich durch Laden geeigneter Programme der Vielfalt der STM-Inhalte anpassen läßt und damit bezüglich der Aufgabenstellung die SDH-Architektur und ähnliche Architekturen beherrscht. Dabei ist die Erkenntnis von Vorteil, daß es ausreicht, zum Decodieren eines VC einer niedrigen Hierarchiestufe ausschließlich die Kette der Pointer zu verfolgen. Ein Pointer dient für das implementierte Format zum Decodieren des Overheads und zum Auffinden des Pointers für das dort implementierte Format. Der letzte Pointer dient zum Auffinden des Format-Anfangs für den gewünschten Kanal. Mit dieser Strategie sind alle Overhead Bytes und der Inhalt des betreffenden Kanals aus der STM-Bytefolge decodierbar.

Die Lösung der gestellten Aufgabe wird durch die im Anspruch 1 angegebenen Merkmale erhalten. Erfindungsgemäß dient hierzu eine Struktur aus miteinander gekoppelten Zählern zum Abzählen aller Bytepositionen je eines Blockformats. Jeder der Zähler steuert über je ein programmierbares RAM Modul zur Auswertung der zum bearbeiteten Blockformat gehörenden Bytes.

Die Zähler können dabei in üblicher Weise mit einzelnen Binärspeichern (Flip-Flops) aufgebaut sein, die untereinander mit kombinatorischer Gatter-Logik verknüpft sind. Die Zählerstruktur muß dann fallweise so einstellbar sein, daß die notwendigen Setz- und Zählfunktionen jeweils ausgeführt werden.

Bei einer besonders universell programmierbaren Ausführung des Decoders sind die Zähler durch je ein programmierbares Schrittschaltwerk realisiert, das aus einem RAM (Random Access Memory) und einem OWM (One Word Memory) besteht. Das RAM wird mit einem bestimmten Inhalt geladen und befindet sich zur Ausführung der gewünschten Funktion im Lesebetrieb. Das OWM hat einen Eingang und einen Ausgang für eine bestimmte Wortbrite und übernimmt mit einm Steuerimpuls das Eingangswort in den Speicher, wobei der gespeicherte Inhalt an seinem Ausgang ansteht.

Das N Bit breite Ausgangswort des OWM ist auf den Adress-Eingang des RAM rückgeführt. Damit erhält man ein Schaltwerk für maximal 2^N Zustände, deren Übergänge durch den RAM-Inhalt definiert werden. Der Wert des Wortes der Breite N am OWM-Ausgang stellt den aktuellen Zustand dar, der entsprechende Wert am OWM-Eingang den nächsten Zustand. Mit dem Schaltimpuls wird der Übergang ausgeführt. Fügt man in die N Bit breite Verbindung vom RAM zum OWM noch einen ebenfalls N Bit breiten Umschalter 33 ein, so kann man das Schaltwerk mit einem Setzimpuls S auf einen Zustand mit dem Vorgabewert P setzen.

P sei der Pointerwert, der angibt, wieviele Bytes nach dem letzten Pointerbyte der Anfang des zu decodierenden Blockformats liegt. Nach einer erfindungsgemäßen Ausführung wird das Schaltwerk als rückwärtslaufender Zähler ausgeführt und sofort nach Eintreffen des Pointerwerts auf diesen gesetzt. Der Zähler läuft bei einem F Byte langen Format zyklisch mit X MOD F im Bereich F-1...0, erreicht also P Schritte nach dem letzten Pointerbyte den als Block-Anfang deklarierten Zustand O. Die Orientierung auf den Block-Inhalt ist ab dem Setzmoment gegeben.

Die Erfindung wird nachfolgend anhand in der Zeichnung dargestellter Ausführungsbeispiele näher erläutert. Es zeigen:
Figur 1 einen Decoder für Informationsströme in eime synchronen digitalen Nachrichten-Transportsystem,
Figur 2 das Blockschaltbild eines Schaltwerks zum Zählen von Bytes,
Figur 3 eine schematische Darstellung der Format-Verknüpfungen,
Figur 4 eine Tabelle mit allen im System vorkommenden Bitmuster (Patterns),
Figur 5 eine Schaltungsstruktur zur Erzeugung eines Bitstroms, in dem alle I-Bits unter Ausschluß aller nicht zum User-Kanal gehörenden Bits gesammelt werden,
Figur 6 eine C-Logik zur Entnahme der C-Patterns aus dem STM-Bytestrom
Figur 7 eine F-Logik zum Formen von Bitgruppen mit I-Bits, die aus den STM-Bytes entnommen werden,
Figur 8 eine U-Logik mit einem OWM (One-Word-Memory) zum Anreihen der I-Bit-Gruppen zu kompletten User Bytes und
Figur 9 die Steuerung für die U-Logik gemäß Figur 8.

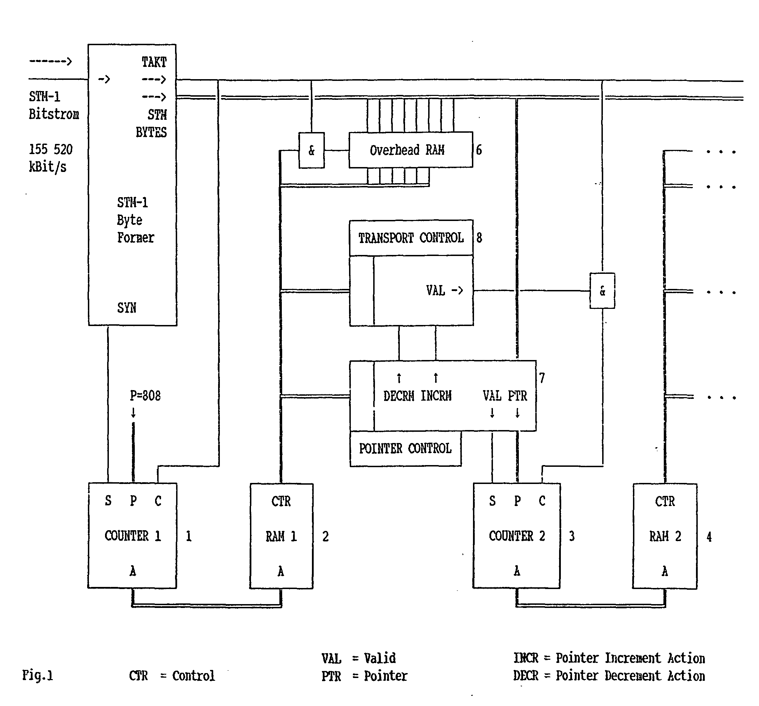

Im SDH-System ist die Wortbreite für die Übertragung des Pointerwerts auf 10 Bits beschränkt. Da der Wertebereich für eine byteweise Definition nicht ausreicht, definiert der Pointer bei den größeren Formaten Dreiergruppen (Tribytes). Andererseits sollte aber das Schaltwerk Einzelbytes zählen. Dieser Diskrepanz wurde durch eine erfindungsgemäße Ausführung Rechnung getragen, indem die Zählposition des Schaltwerks auf das Vierfache des Pointerwerts gesetzt wird. Dies erfolgt durch Einkopplung des Pointerworts mit einer Verschiebung um 2 Bit. Beispielsweise entspricht der dezimale Pointerwert 782 der Binärzahl 11 0000 1110. Diese ist 10-stellig. Die Verschiebung der Einkopplung um 2 Bit bewirkt das Anhängen von 2 Nullen. Damit entsteht die 12-stellige Binärzahl 1100 0011 1000 mit dem Dezimal-Äqivalent 3128, nämlich dem Vierfachen des Pointerwerts (Figur 1).
In Figur 1 ist die Funktion einer erfindungsgemäßen Anordnung anhand der Funktion der Steuerstufe für die STM-1 Ebene und in Bezug auf die darunter liegende Hierarchieebene dargestellt. Ein nicht weiter aufgeschlüsselter STM Byte Former (SBF) empfängt den STM-1 Bitstrom, überwacht ihn in bezug auf das Synchronwort, gibt nach dem letzten Byte des 6 Byte langen Synchronworts einen Synchron-Impuls ab und wandelt dann den Bitstrom in eine Bytefolge. Jedes gültige Byte wird mit einem Byte-Takt gekennzeichnet.

Der erste Zähler 1 für die 2340 Bytepositionen des STM-1 besteht aus einen RAM und einen OWM. Er wird vom Synchron-Impuls des SBF gesetzt. Für diesen Vorgang kann das Synchronwort wie ein Pointer mit einem festen Wert betrachtet werden. Bei der o. a. Zählweise ist die Zählfolge für den STM-1 0000 - 3239 - 3238 - 3236 - 3235 - 3234 - 3232 - ... und nach dem sechsten Byte muß der Wert 3232 gesetzt werde. Der feste Tribyte-Pointerwert ist aufgrund der um 2 Stellen versetzten Einkopplung gleich dem vierten Teil des Setzwertes, also 808. Nach dem Setzvorgang definiert der Zähler 1 für jede Byteposition des STM-1 einen bestimmten Zählzustand. Damit kann er insbesondere einem RAM je eine Adresse für zu speichernde Overhead Bytes zuweisen und einen Speicher-Impuls freigeben. Dieses RAM entnimmt dann die betreffenden Bytes direkt aus der STM-1-Bytefolge.

Der Zähler 1 steuert außerdem einen Modul "Pointer Control". Dieser entnimmt aus der STM-1 Bytefolge die Bytes des auf den Anfang des/eines im STM-1 transportierten Blockformats weisenden Pointers, der außer dem aktuellen Wert zusätzlich die Information eines Wert-Inkrements (1) oder -Dekrements (D) mit sich führt. Der Modul zählt die unveränderten Werte und prüft die Zulässigkeit einer Werte-Änderung. Zum vorgesehenen Zeitpunkt setzt er den aus einem RAM und einem OWM bestehenden zweiten Zähler 3. Danach definiert dieser für jede Byteposition des im STM-1 enthaltenen Blockformats einen bestimmten Zählzustand. Der ebenfalls vom ersten Zähler 1 gesteuerten Modul "Transport Control" schließlich gibt jeweils einen Zählimpuls für den zweiten Zähler 3 frei, wenn das jeweils eintreffende STM-1-Byte zu dem enthaltenen Blockformat gehört. Hierbei berücksichtigt der Modul bei Pointerveränderungen mit Hilfe der Informationen I und D auch die Positionen für positives und negatives Byte- oder Tribyte-Stopfen, d. h. die Positionen, die normalerweise Nutzinformationen führen und mit Nullinformation gestopft werden können und die Positionen, die normalerweise leer sind und mit Nutzinformation belegt werden können.

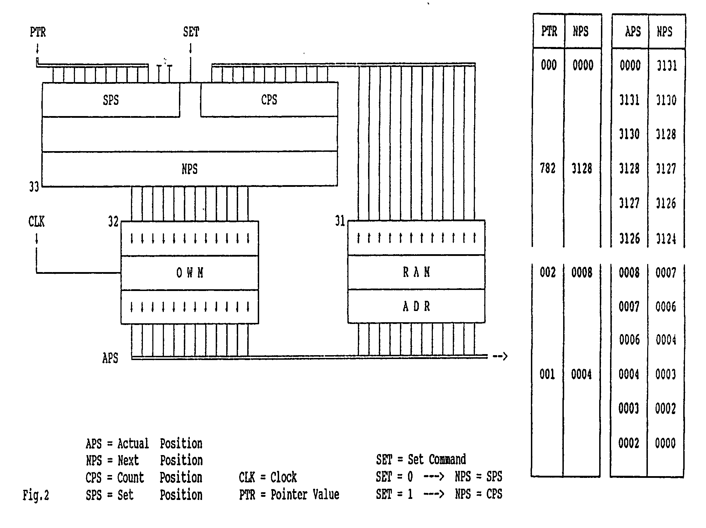

Figur 2 zeigt ein Blockschaltbild für die Realisierung der Einkopplung und der Zählfunktion. Der Umschalter 33 erhält vom RAM 31 ein Binärwort mit dem Wert NPS und 10-stelligen Pointerwert PTR. Durch die Art der Einkopplung mit 2 angefügten Null-Bits übernimmt der Umschalter den Wert Q = 4 ^{*} PTR. Mit dem Steuereingang SET wird entweder der Wert NPS oder der Wert Q dem Eingang des OWM 32 zugeführt und mit einem Schaltimpuls CLK im OWM gespeichert. Damit liegt er auch am Ausgang des OWM als aktueller Zählwert APS vor. Dieser wird als Adresse für den Inhalt des RAM 31 verwendet. Für jede der 2 ^ 12 Adressen kann im RAM ein 12-Bit-Wort geladen sein. Das zur jeweiligen Adresse gehörende Wort mit dem Wert N wird bei Durchschaltung zum OWM-Eingang als nächster Zählwert wirksam, weil er nach dem nächsten Takt CLK am RAM Eingang ansteht.

Die Tabelle in der Figur 2 zeigt z. B., wie der Pointerwert PTR=782 den Wert Q=3128 erzeugt, der durch Steuerung SPS=1 und Takt CLK ins OWM geladen werden kann und dann als aktueller Zählwert an dessen Ausgang anliegt und weiterhin dem Adresseingang des RAM zugeführt wird, in dem an dieser Adresse der Wert NPS=3127 steht. Mit dem Steuersignal SPS=O und dem nächsten Taktimpuls steht der Wert an der Stelle APS. Mit weiteren Takten werden die Zählwerte 3126, 3124, ..., 4, 3, 2, 0, 3131, 3130, 3128, ... angenommen. Das Schrittschaltwerk bildet also einen Zähler, der 2430 verschiedene Werte zyklisch durchläuft und setzbar ist auf Werte, die durch 4 ohne Rest teilbar sind.

Der Zähler ist so programmiert, daß er pro Setzwert 3 Zählwerte durchläuft.

Figur 3 zeigt 3 Fälle, in denen der Zähler 2 unmittelbar den User Kanal abtastet 11, 12, 13. In den anderen Fällen tastet der Zähler 2 einen VC ab, in dem sich der User Kanal befindet, zu dessen Abtastung ein dritter Zähler benötigt wird, der vom Zähler 2 in gleicher Weise gesteuert wird wie der Zähler 2 vom Zähler 1. Mit einer 3-stufigen Zähleranordnung kann also das System im Sinne der Aufgabenstellung beherrscht werden.

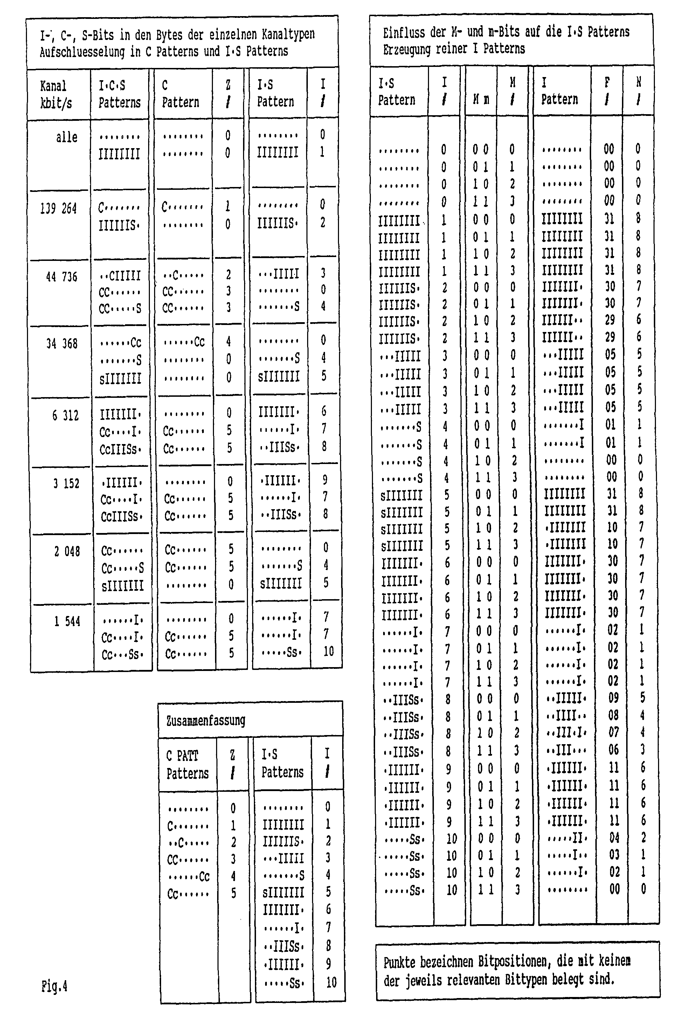

Dem in der Kette letzten Zähler kommt die Aufgabe zu, die Informationsbits des User-Kanlas von den nicht zum User-Kanal gehörenden Bits zu trennen und in einem reinen User-Kanal zu sammeln. Dabei müssen die Bit-Stopf-Positionen beachtet werden. Figur 4 zeigt eine Tabelle mit allen im System vorkommenden Patterns, in denen Control Bits C, c, Stopfpositionen S, s, sowie fest positionierte Informationsbits I vorkommen. Alle Positionen, denen keine der genannten Eigenschaften zugeordnet ist, sind mit einem Punkt gekennzeichnet. Dies ist die Tabelle der I-C-S Patterns. Daraus können die Patterns mit Control Bits (C, c) und die Patterns mit I-Bits und Stopfpositionen (I, S, s) separiert werden. Diese sind in besonderen Spalten dargestellt und numeriert, sowie in einer weiteren Tabelle nach ihrer Numerierung zusammengestellt.

Zur Kennzeichnung des Inhalts der Stopfpositionen werden im gleichen Block pro Stopfposition 3 oder 5 Control Bits mitgeführt. Deren Binärwert 1 kennzeichnet die Belegung der zugehörigen Position mit Leerinformation, der Wert 0 kennzeichnet die Belegung mit Nutzinformation. Eine Sicherung gegen Störungen durch Bitfehler erfolgt durch Auswertung der bei einer ungereaden Anzahl von Proben immer eindeutigen Majorität. Wenn also z. B. >2 von 5 Bits den Wert Null haben, wird dieser als wahr angenommen. Auf diese Weise wird aus jeder Gruppe zusammengehöriger C-Bits (C, c) ein eindeutiger Majoritätswert gebildet.

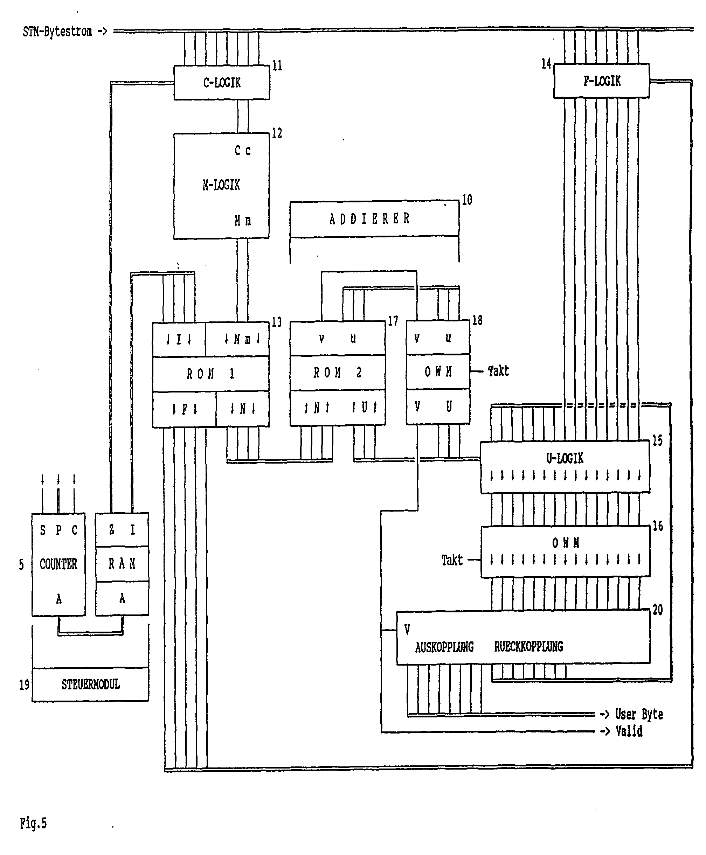

Eine erfindungsgemäße Schaltungsstruktur zur Erzeugung eines Bitstroms, in dem alle I-Bits unter Ausschluß aller nicht zum User Kanal gehörenden Bits gesammelt werden, zeigt Figur 5. Der aus dem Zähler 5 und dem zugeordneten RAM bestehende Stuermodul 19 ist der letzte in einer Kette von 2 oder 3 solcher Steuermodule. Es durchläuft alle Bytepositionen des Blocks, aus dem der User-Bitstrom gewonnen wird.

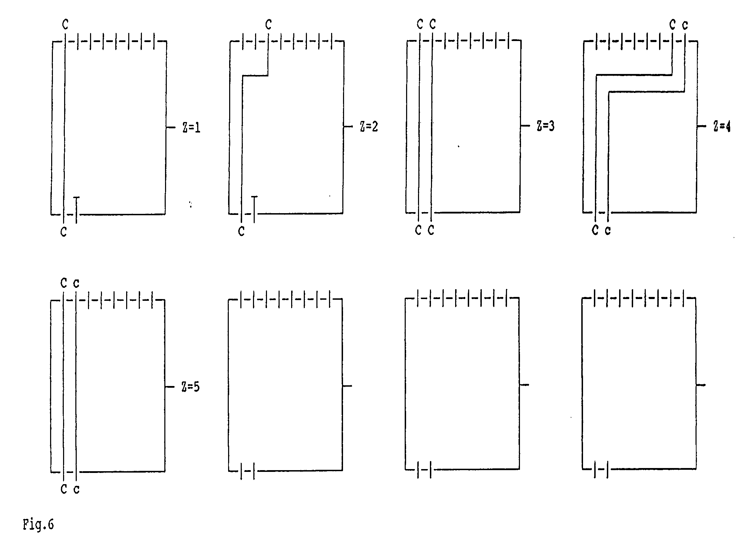

Eine erste Aufgabe ist das Erkennen der Belegung der Stopfpositionen mit Hilfe der Control Bits. Erfindungsgemäß werden dazu alle Bytes, die Control Bits enthalten, über eine in Figur 6 genauer spezifizierte C-Logik 11 einer M-Logik 12 zugeführt.
Dabei steuert das Schaltwerk die C-Logik so, daß die maximal 2 C-Bits pro Byte aus ihrer Position im Byte an die beiden Eingänge der M-Logik 12 geliefert werden. Es gibt Blockformate, in denen gleichzeitig 2 Stopfpositionen behandelt werden, so daß auch gleichzeitig 2 Folgen von C-Bits (C, c) beobachtet werden müssen. Bei Blockformaten mit nur einem gleichzeitig zu bearbeitenden Stopfbit gibt es andrerseits Bytes, in denen 2 Control Bits vorkommen. Die M-Logik wird deshalb entsprechend dem jeweils vorliegenden Fall programmiert. Sie zählt für 1 oder 2 Stopfbits die C-Bits mit Inhalt 1 und entscheidet über die Majorität bei 3 oder 5 C-Bits. Wenn für C oder c mehr Einsen als Nullen vorliegen, meldet die M-Logik für das mit C verknüpfte Stopfbit M=1 bzw. für das mit c verknüpfte Stopfbit m=1. Dies bedeutet, daß die Stopfposition nicht mit einem I-Bit belegt ist, sonst meldet die M-Logik M=0 bzw. m=0 zur Kennzeichnung einer mit einem 1-Bit belegten Stopfposition.

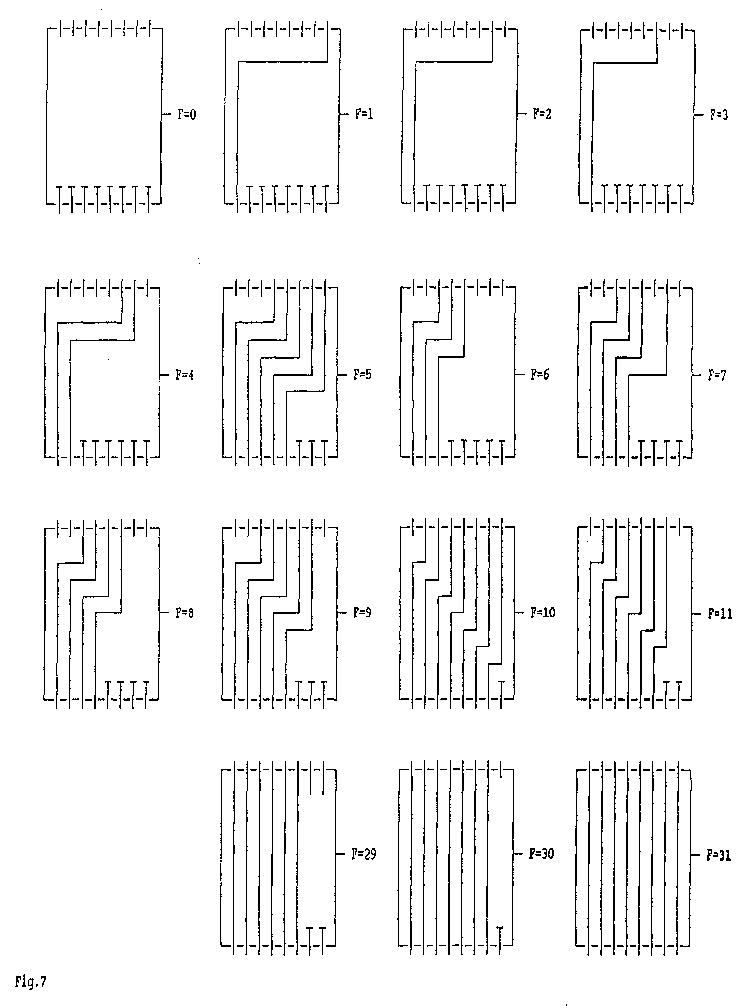

Eine zweite Aufgabe besteht im Selektieren der I-Bits aus dem STM-Bytestrom. Erfindungsgemäß liefert der Steuermodul 19 dazu für jede Byteposition einen Code für das Muster der Bitposition mit I- und S-Bits (I/S-Patterns) an ein ROM 13 und meldet außerdem die Zahl N der I-Bits im jeweiligen Byte. Der F-Code steuert eine in Figur 7 genauer spezifizierte F-Logik 14 zur Entnahme des I-Patterns aus dem STM-Byte und zur lückenlosen Aufreihung der I=Bits.

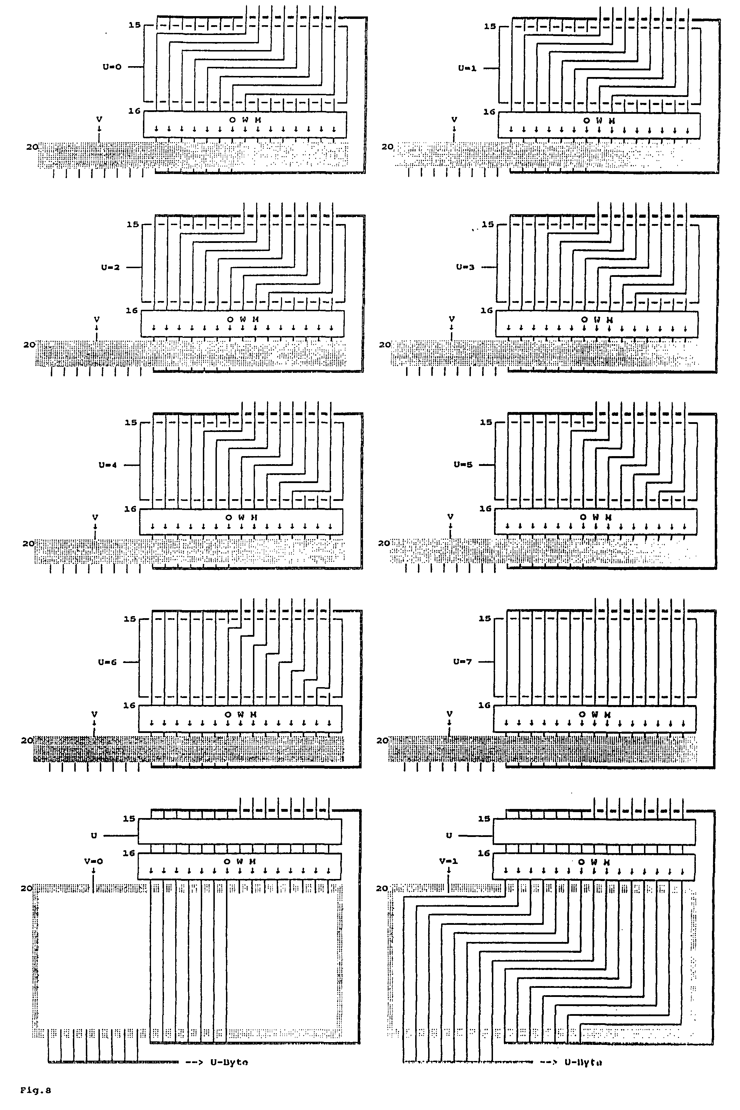

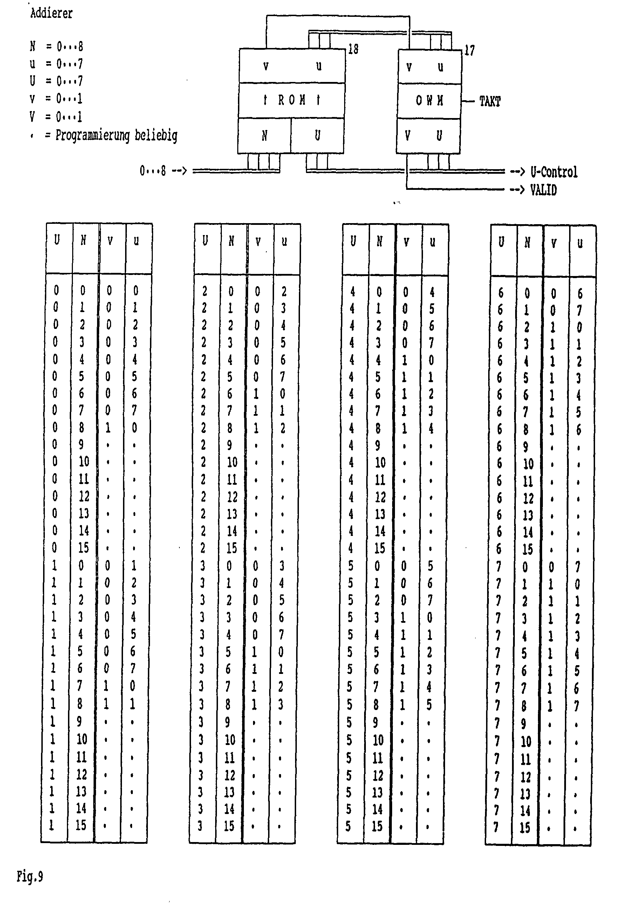

Die letzte Aufgabe besteht im Sammeln der Gruppen aus N I-Bits (N=0...8) in komplette Bytes (U-Bytes) mit je 8 I-Bits. Erfindungsgemäß liefert dazu die F-Logik 14 die Bitgruppe über eine in Figur 8 genauer spezifizierte U-Logik 15 an ein vorzugsweise 15 Bit fassendes OWM 16 unter Steuerung durch einen aus einem ROM 17 und einem OWM 18 bestehenden Addierer, dessen Funktion in Figur 9 genauer beschrieben ist. Der Addierer verfolgt den Füllgrad des OWM 16 durch Speicherung des aktuellen Füllstands (U) und Addition der Größe N der anzufügenden Bitgruppe. Die Addition ergibt die Stelle (u), wo die nächste Bitgruppe angefügt werden muß. Für u>7 wird mit einer Valid-Information (V) ein Byte zur Abholung freigegeben, die nicht mehr in das Byte passende Restgruppe an der Stelle U = 0 wieder im OWM gespeichert und die nächste Anfügestelle mit u = U + N - 8 errechnet.

## Patentansprüche

1. Decoder für Informationsströme in einem Synchronen Digitalen Nachrichten Transport System; das so ausgestaltet ist; daß die Informationsströme mehrerer Nachrichtenkanäle in einem Synchronen Transportmodul STM untergebracht werden können, in den Nachrichtenkanäle mit Hilfe von Virtuellen Containern VC definiert werden, und zwar innerhalb eines hierarchischen Systems von Blockformaten, bei dem Blockformate einer Hierarchie-Ebene als Träger für Blockformate der nächst niedrigen Ebene dienen; wobei
- das jeweilige Trägerformat einen Overhead enthält und ein oder mehrere Blockformate der nächst niedrigeren Ebene mit sich führt;
- ein mitgeführtes Blockformat auch über mehrere aufeinanderfolgende Synchrone Transportmodule STM verteilt sein kann;
- das Trägerformat für jedes mitgeführte Blockformat einen Pointer und eine Position bereitstellt, die mit einem Byte oder Tribyte belegt ist und leergelassen werden kann;
- der Pointer die Byteposition in seinem Blockformat definiert, wo das Format des betreffenden mitgeführten Blocks beginnt;
- der Wert eines Pointers inkrementiert oder dekrementiert werden kann und beim Dekrementieren die dafür vorgesehene Position zusätzlich belegt wird, beim Inkrementieren die dafür vorgesehene vorher belegte Position leerbleibt;
- das Blockformat der untersten Hierarchiestufe einen Virtual Container VC enthält, der Bit-Stopfpositionen aufweist, deren Zugehörigkeit zum User-Bitstrom von Control Bits definiert werden;
- der Informationsstrom in dem Synchronen Transportmodul STM in einem Bitstrom übertragen wird,
wobei der Decoder
- den Bitstrom mit Hilfe eines im Synchronen Transportmodul STM vorhandenen Synchronwortes in eine Bytefolge wandelt;
- in Kette geschaltete Zähler (1), (3) zum Decodieren je eines Blockformats aufweist, die derart ausgestaltet sind, däß sie für jede Position einen eindeutigen Zustand definieren;
- einen steuerbaren Modul (6) zur Entnahme von im Trägerformat fest positionierten Bytes aus dem STM-Bytestrom aufweist;
- einen steuerbaren Modul (7) zur Entnahme von Pointerbytes, zur Ermittlung des Pointerwerts sowie von Pointeraktionen und zum Setzen des in der Kette folgenden Zählers auf den Pointerwert aufweist;
- einen steuerbaren Modul (8) zur Freigabe eines Zählimpulses für den folgenden Zähler aufweist;
- einen in der Kette letzten Zähler (5) aufweist zur Decodierung eines Virtual Containers und mit diesem Zähler verbundene steuerbare Module zur Entnahme von Bytes aus der STM-Bytefolge;
- einen Modul (11) zur Entnahme von Bytes mit Control Bits und einen Modul (14) zur Entnahme von Bytes mit zum User-Kanal gehörenden Bits aufweist, und der Dekoder **dadurch gekennzeichnet**, ist daß jeder Zähler jedes Byte des in seiner Stufe vorhandenen Blockformats markiert, jedem Zähler, dem in der Kette ein weiterer folgt, ein programmierbarer Speicher (RAM 2, 4) zugeordnet ist, der abhängig vom Zählerstand einen Steuercode an den Modul (6) zur Entnahme von im Trägerformat fest positionierten Bytes aus dem STM-Bytestrom an den Modul (7) zur Entnahme von Pointerbytes zur Ermittlung des Pointerwerts und zur Ermittlung der Pointeraktion oder an den Modul (8) zur Freigabe eines Zählimpulses für den in der Kette folgenden Zähler abgibt, und dem letzten Zähler in der Kette (5) ein programmierbarer Speicher (RAM) zugeordnet ist, der zur Entnahme von Bytes aus dem zu decodierenden Virtual Container abhängig vom Zählerstand einen Steuercode an den Modul (11) zur Entnahme von Bytes mit Control Bits oder an den Modul (14) zur Entnahme von Bytes mit zum User-Kanal gehörenden Bits abgibt.

2. Decoder nach Anspruch 1, gekennzeichnet durch einen steuerbaren F-Logik-Modul (14) zum Anreihen aller User Info Bits (I-Bits) eines STM-Bytes und durch einen steuerbaren U-Logik Modul (15) zum Verschieben der Einkopplung der so gewonnen I-Bit-Gruppen in ein 15 Bit breites OWM (16), das an seinem Ausgang 8 Bit breite User Bytes abgibt in deren Folge der I-Bit-Strom lückenlos vorliegt; wobei der U-Logik-Modul (15) von einem Addierer (17, 18) einen Wert U erhält, der die Einkoppelstelle für das OWM (16) definiert, wobei die ersten 8 Bits des OWM (16) den Bereich des anzukoppelnden User Bytes darstellen, wobei der Addierer (17, 18) bei Vorliegen eines kompletten User Byters ein Valid-Signal (V) abgibt, und der U-Logik-Modul (15) mit dem nächsten Einkoppeltakt einen nicht mehr in das gemeldete Byte passenden Bitgruppenrest wieder in das OWM (16) an den Anfang des nächsten U-Bytes lädt.

3. Decoder nach Anspruch 2, gekennzeichnet durch eine Anordnung aus einem ersten ROM (13), einem zweiten ROM (17) und einem OWM (18), wobei ein programmierbares RAM ein das Pattern des STM-Bytes mit Info- und Stopfbits kennzeichnender Code (I) von der Majoritätslogik (12) die aus den Control Bits C, c gewonnen Ergebnisse M, m dem Adresseingang des ersten ROM vom Positionszähler (5) zuführt, wobei das erste ROM (13) aus dem Code I und den Werten M, m einen Code F zum Steuern der F-Logik (14) ermittelt und das Increment N für den Wert U entsprechend der Zahl der einzukoppelnden 1-Bits bildet, wobei das OWM (18) den jeweils aktuellen Wert U speichert, der die Einkoppelstelle für das OWM (16) definiert, wobei das zweite ROM (17) aus den zugeführten Werten N und U den nächsten Einkoppelwert für das OWM (18) bildet.

## Claims

1. A decoder for information streams in a synchronous digital message transport system, configured in such a way that the information streams of several message channels can be accommodated in a synchronous transport module (STM) by defining message channels with the help of virtual containers (VC), specifically within a hierarchical system of block formats, in which block formats of a hierarchy plane serve as a carrier for block formats of the next lowest plane; wherein
- the respective carrier format contains an overhead and incorporates one or more block formats of the next lowest plane;
- an incorporated block format can also be distributed over several sequential synchronous transport modules (STM);
- the carrier format for each incorporated block format provides a pointer and position occupied by a byte or tribyte that can be left empty;
- the pointer defines the byte position in its block format where the format of the respectively incorporated block begins;
- the value of a pointer can be incremented and decremented, with the position provided for this purpose being additionally occupied while decrementing, and the previously occupied position provided for this purpose remaining empty during incrementing;
- the block format of the lowest hierarchy level contains a virtual container (VC) exhibiting bit stuffing positions, whose association with the user bit stream is defined by control bits;
- the information system in the synchronous transport module (STM) is transferred in a bit stream;
wherein the decoder
- converts the bit stream into a byte sequence using a synchronous word present in the synchronous transport module (STM);
- has chained counters (1), (3) for decoding one block format each, configured in such a way that they define an unambiguous state for each position;
- has a controllable module (6) for removing bytes permanently positioned in the carrier format out of the STM byte stream;
- has a controllable module (7) for removing pointer bytes, determining the pointer value and pointer actions, and to set the ensuing counter in the chain to the pointer value;
- has a controllable module (8) for releasing a counting pulse for the ensuing counter;
- has a last counter (5) in the chain for decoding a virtual container, and controllable modules connected with this counter for removing bytes from the STM byte sequence;
- has a module (11) for removing bytes with control bits and a module (14) for removing bytes with bits belonging to the user channel and the decoder, and the decoder is characterized by the fat that each counter marks each byte of the block format present in its level, each counter followed by another in the chain is allocated a programmable memory (RAM) (2, 4) which, depending on the counter status, releases a control code to the module (6) for removing bytes permanently positioned in the carrier format from the STM byte stream, to the module (7) for removing pointer bytes to determine the pointer value and pointer action, or to the module (8) for releasing a counter pulse for the ensuing counter in the chain, and whose last counter in the chain (5) is allocated a programmable memory (RAM) which, in order to remove bytes from the virtual container to be decoded and depending on the counter status, releases a control code to the module (11) for removing bytes with control bits, or to the module (14) for removing bytes with bits belonging to the user channel.

2. A decoder according to claim 1, characterized by a controllable F logic module (14) for sequencing all user info bits (I bits) of an STM byte, and by a controllable U logic module (15) for shifting the coupling of I bit groups obtained in such a way into a 15 bit ready OWM (16), whose output releases 8-bit wide user bytes, in whose sequence the I bit stream is present without any gaps; wherein the U logic module (15) contains a value U from an adder (17, 18) which defines the coupling point of the OWM (16), wherein the first 8 bits of the OWM (16) represent the range of the user bytes to be coupled, wherein the adder (17, 18) releases a valid signal (V) when a complete user byte is present, and the U logic module (15) loads a residual bit group that no longer fits in the reported byte back into the OWM (16) at the beginning of the next U byte during the ensuing coupling cycle.

3. A decoder according to claim 2, characterized by an arrangement comprised of a first ROM (13), a second ROM (17) and an OWM (18), wherein a programmable RAM relays the results M, m obtained from the control bits C from the address input of the first ROM of the position counter (5) from the majority logic (12) in a code (I) characterizing the pattern of the STM byte with info and stuffing bits, wherein the first ROM (13) determines a code F to control the F logic (14) from the code I and values M, m, and forms the increment N for the value U based on the number of I bits to be coupled, wherein the OWM (18) stores the respective current value U that defines the coupling point for the OWM (16), wherein the second ROM (17) forms the next coupling value for the OWM (18) from the supplied values N and U.

## Revendications

1. Décodeur pour flux d'informations dans un système de transport d'informations numériques synchrones, conçu de façon telle que les flux d'information de plusieurs canaux d'information peuvent être placés dans un module de transport synchrone STM, en définissant des canaux d'informations à l'aide de containers virtuels VC, à l'intérieur d'un système hiérarchisé de formats de bloc, dans lequel les formats de bloc d'un niveau hiérarchique servent de support aux formats de bloc du niveau immédiatement inférieur; sachant que :
- le format support contient un en-tête et entraîne un ou plusieurs formats de bloc du niveau immédiatement inférieur;
- un format de bloc entraîné peut également être subdivisé en plusieurs modules de transport synchrones STM consécutifs;
- le format support pour chaque format de bloc entraîné prépare un pointeur et une position qui est chargée d'un byte ou d'un tribyte et peut être laissée vide;
- le pointeur définit la position de byte dans son format de bloc, là où commence le format du bloc en question entraîné;
- la valeur d'un pointeur peut être incrémentée ou décrémentée et dans le cas d'un passage à l'incrément inférieur, la position prévue à cet effet est occupée de manière supplémentaire, tandis que dans le cas d'un passage à l'incrément supérieur, la position antérieurement occupée prévue à cet effet reste vide,
- le format de bloc du niveau hiérarchique inférieur contient un container virtuel VC présentant des positions de bits de bourrage dont l'appartenance au flux binaire utilisateur est définie par des bits de contrôle;
- le flux d'information du module de transport synchrone STM est transmis dans un flux binaire;
précisant que le décodeur :
- convertit le flux binaire en séquence de bytes à l'aide d'un terme synchrone présent dans le module de transport synchrone STM;
- présente des compteurs enchaînés (1), (3) pour décodage de chaque format de bloc, lesquels sont conçus pour définir une situation non équivoque pour chaque position;
- présente un module commandable (6) pour prélèvement de bytes issus du flux de bytes STM positionnés fixement dans le format support;
- présente un module commandable (7) pour prélèvement de bytes pointeurs, pour détermination de la valeur de pointage et d'actions des pointeurs, et pour régler le compteur suivant dans la chaîne sur la valeur de pointage;
- présente un module commandable (8) émettant une impulsion de comptage pour le compteur suivant;
- présente un dernier compteur (5) dans la chaîne, pour décodage d'un container virtuel et des modules commandables liés à ce compteur pour prélever des bytes dans la séquence de bytes STM;
- présente un module (11) pour prélèvement de bytes avec des bits de contrôle et un module (14) pour prélèvement de bytes avec des bits appartenant au canal utilisateur,
décodeur caractérisé en ce que chaque compteur marque chaque byte du format de bloc se trouvant à son niveau, en ce qu'à chaque compteur suivi par un autre dans la chaîne, on affecte une mémoire programmable RAM (2, 4) qui, en fonction de l'état du compteur, émet un code de commande au module (6) pour le prélèvement de bytes du flux de bytes STM positionnés fixement dans le format support, au module (7) pour le prélèvement de bytes pointeurs, détermination de la valeur de pointage et détermination de l'action des pointeurs, ou au module (8) pour émettre une impulsion de comptage pour le compteur suivant dans la chaîne, et en ce qu'on associe au dernier compteur dans la chaîne (5) une mémoire programmable (RAM) qui en vue du prélèvement de bytes dans le container virtuel à décoder, émet en fonction de l'état du compteur un code de commande au module (11) pour prélèvement de bytes avec des bits de contrôle ou au module (14) pour prélèvement de bytes avec des bits appartenant au canal utilisateur.

2. Décodeur selon la revendication 1, caractérisé par un module de logique-F (14) commandable pour l'alignement de tous les User Info Bits (Bits-I) d'un byte STM et par un module de logique-U (15) commandable pour déplacement de l'accouplement des groupes de bits-I ainsi obtenus dans une mémoire OWM (16) vaste de 15 bits, qui émet à sa sortie des bytes utilisateurs larges de 8 bits, dans la séquence desquels le flux de bits-I se présente sans discontinuité; le module de logique-U (15) recevant d'un additionneur (17, 18) une valeur U définissant la position de liaison pour la mémoire OWM (16), les 8 premiers bits de la mémoire OWM (16) représentant la zone du byte utilisateur à coupler, l'additionneur (17, 18) émettant un signal de validation (V) en présence d'un byte utilisateur complet, et le module de logique-U (15) rechargeant dans la mémoire OWM (16), lors du cycle de liaison suivant et au début du byte U suivant, un reste de groupe de bits n'entrant plus dans le byte mentionné.

3. Décodeur selon la revendication 2, caractérisé par un dispositif constitué d'une première ROM (13), d'une deuxième ROM (17) et d'une OWM (18), dans lequel une RAM programmable envoie un code (I) de la logique majoritaire (12) caractéristique du motif du byte STM avec des bits d'information et de bourrage les résultats M, m obtenus des bits de contrôle C, c à l'entrée d'adresse de la première ROM du compteur de position (5), la première ROM (13) déterminant à partir du code I et des valeurs M, m, un code F pour la commande de la logique-F (14), et formant l'incrément N pour la valeur U en fonction du nombre de bits-I à coupler, l'OWM (18) mémorisant la valeur actuelle U définissant la position d'accouplement pour l'OWM (16), la seconde ROM (17) formant à partir des valeurs N et U adressées, la valeur de couplage suivante puor l'OWM (18).
